## Europäisches Patentamt

## European Patent Office

## Office européen des brevets

(19)

(11) **EP 1 507 422 A1**

(12) **EUROPEAN PATENT APPLICATION**

(43) Date of publication:
**16.02.2005 Bulletin 2005/07**

(51) Int Cl.⁷: **H04Q 7/30**, H04L 12/56

(21) Application number: **03018471.7**

(22) Date of filing: **14.08.2003**

| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK**<br><br>(71) Applicant: **MATSUSHITA ELECTRIC INDUSTRIAL CO., LTD.**<br>**Kadoma-city, Osaka 571-8501 (JP)**<br><br>(72) Inventors:<br>• **Petrovic, Dragan**<br>**64295 Darmstadt (DE)** | • **Löhr, Joachim**<br>**64295 Darmstadt (DE)**<br>• **Seidel, Eiko**<br>**64285 Darmstadt (DE)**<br><br>(74) Representative: **Grünecker, Kinkeldey, Stockmair & Schwanhäusser Anwaltssozietät Maximilianstrasse 58 80538 München (DE)** |

(54) **Serving base station selection during soft handover**

(57)    The present invention relates to methods for controlling a plurality of base stations in a mobile communication system comprising a communication terminal, the plurality of base stations and a control unit connected to the plurality of base stations, wherein the communication terminal is in a soft handover. Further, the present invention relates to methods for signaling uplink channel quality characteristics, that are considered when controlling the plurality of base stations. Finally, the present invention relates to a base station, the control unit and the communication terminal which are specifically adapted to perform the control method and the signaling method respectively. To reduce the signaling load on the wired interface between a base station and a control unit the present invention selects a serving base station based on uplink channel quality characteristics and controls one or more of the base stations except the serving base station not to transmit data via the wired interface.

Fig. 9

**Description**

The present invention relates to methods for controlling a plurality of base stations in a mobile communication system comprising a communication terminal, the plurality of base stations and a control unit connected to the plurality of base stations, wherein the communication terminal is in a soft handover. In an alternative architecture the mobile communication system comprises a communication terminal, a plurality of base stations and a gateway interconnecting the mobile communication network to a fixed communication network. Further, the present invention relates to methods for signaling uplink channel quality characteristics, that are considered when controlling the plurality of base stations. Finally, the present invention relates to a base station, the control unit and the communication terminal that are specifically adapted to perform the control method and the signaling method respectively.

*TECHNICAL BACKGROUND*

W-CDMA (Wideband Code Division Multiple Access) is a radio interface for IMT-2000 (International Mobile Communication), which was standardized for use as the 3rd generation wireless mobile telecommunication system. It provides a variety of services such as voice services and multimedia mobile communication services in a flexible and efficient way. The standardization bodies in Japan, Europe, USA, and other countries have jointly organized a project called the 3rd Generation Partnership Project (3GPP) to produce common radio interface specifications for W-CDMA.

The standardized European version of IMT-2000 is commonly called UMTS (Universal Mobile Telecommunication System). The first release of the specification of UMTS has been published in 1999 (Release 99). In the mean time several improvements to the standard have been standardized by the 3GPP in Release 4 and Release 5 and discussion on further improvements is ongoing under the scope of Release 6.

The dedicated channel (DCH) for downlink and uplink and the downlink shared channel (DSCH) have been defined in Release 99 and Release 4.. In the following years, the developers recognized that for providing multimedia services - or data services in general - high speed asymmetric access had to be implemented. In Release 5 the high-speed downlink packet access (HSDPA) was introduced. The new high-speed downlink shared channel (HS-DSCH) provides downlink high-speed access to the user from the UMTS Radio Access Network (RAN) to the communication terminals, called user equipments in the UMTS specifications.

HSDPA is based on techniques such as fast packet scheduling, adaptive modulation and hybrid ARQ (HARQ) to achieve high throughput, reduce delay and achieve high peak data rates.

*HYBRID ARQ SCHEMES*

The most common technique for error detection of non-real time services is based on Automatic Repeat reQuest (ARQ) schemes, which are combined with Forward Error Correction (FEC), called Hybrid ARQ. If Cyclic Redundancy Check (CRC) detects an error, the receiver requests the transmitter to send additional bits or a new data packet. From different existing schemes the stop-and-wait (SAW) and selective-repeat (SR) continuous ARQ are most often used in mobile communication.

A data unit will be encoded before transmission. Depending on the bits that are retransmitted three different types of ARQ may be defined.

In HARQ Type I the erroneous data packets received, also called PDUs (Packet Data Unit) are discarded and new copy of that PDU is retransmitted and decoded separately. There is no combining of earlier and later versions of that PDU. Using HARQ Type II the erroneous PDU that needs to be retransmitted is not discarded, but is combined with some incremental redundancy bits provided by the transmitter for subsequent decoding. Retransmitted PDU sometimes have higher coding rates and are combined at the receiver with the stored values. That means that only little redundancy is added in each retransmission.

Finally, HARQ Type III is almost the same packet retransmission scheme as Type II and only differs in that every retransmitted PDU is self-decodable. This implies that the PDU is decodable without the combination with previous PDUs. In case some PDUs are so heavily damaged that almost no information is reusable self decodable packets can be advantageously used.

*UMTS ARCHITECTURE*

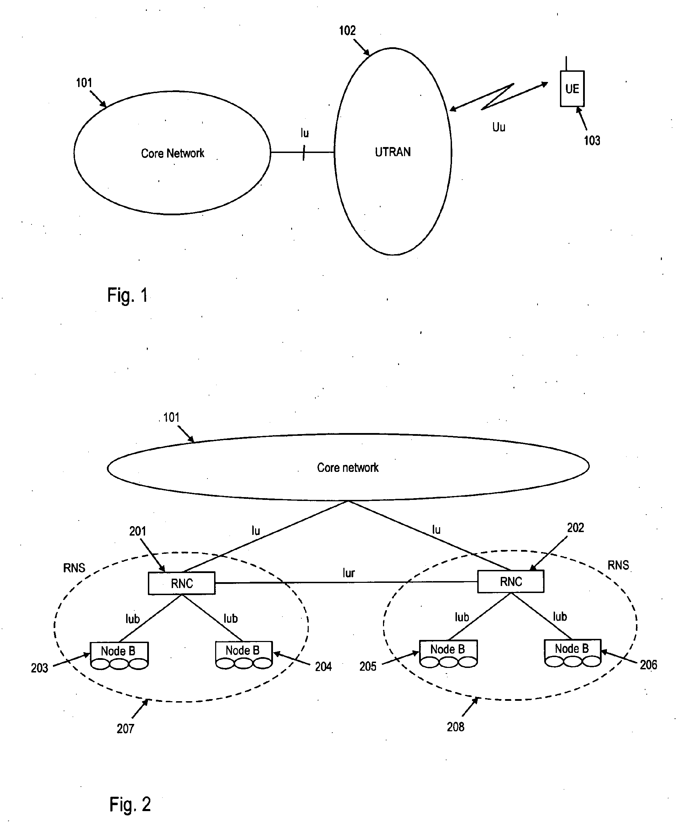

The high level R99/4/5 architecture of Universal Mobile Telecommunication System (UMTS) is shown in Fig. 1 (see 3GPP TR 25.401: "UTRAN Overall Description", available from http://www.3gpp.org). The network elements are functionally grouped into the Core Network (CN) 101, the UMTS Terrestrial Radio Access Network (UTRAN) 102 and the User Equipment (UE) 103. The UTRAN 102 is responsible for handling all radio-related functionality, while the CN 101 is responsible for routing calls and data connections to external networks. The interconnections of these network elements are defined by open interfaces (Iu, Uu). It should be noted that UMTS system is modular and it is therefore possible to have several network elements of the same type.

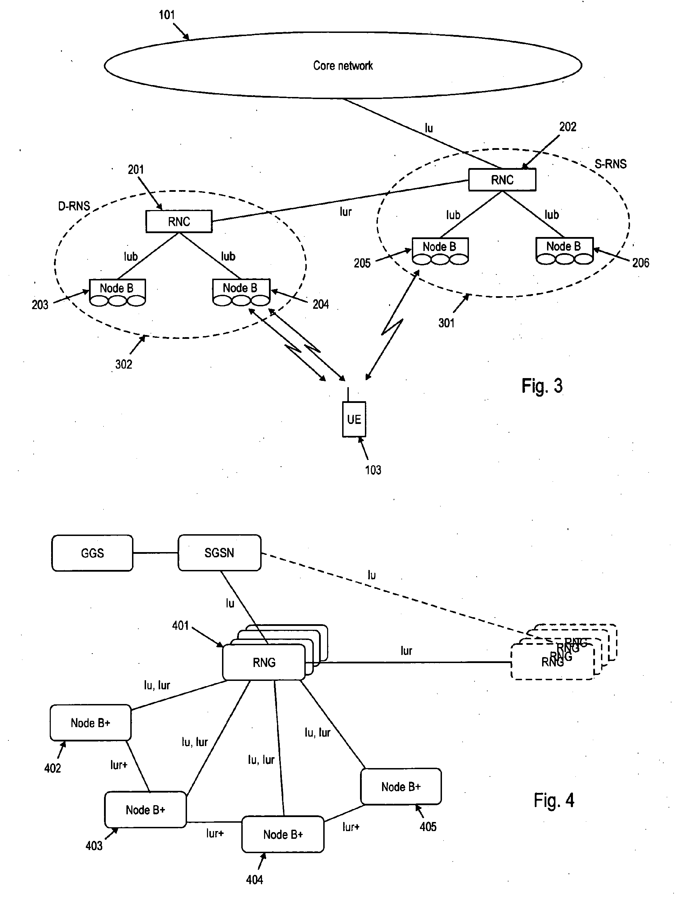

Fig. 2 illustrates the current architecture of UTRAN. A number of Radio Network Controllers (RNCs) 201, 202 are connected to the CN 101. Each RNC 201, 202 controls one or several base stations (Node Bs) 203, 204, 205, 206, which in turn communicate with the UEs. An RNC controlling several base stations is called Controlling RNC (C-RNC) for these base stations. A set of controlled base stations accompanied by their C-RNC is referred to as Radio Network Subsystem (RNS) 207, 208. For each connection between User Equipment and the UTRAN, one RNS is the Serving RNS (S-RNS). It maintains the so-called Iu connection with the Core Network (CN) 101. When required, the Drift RNS 302 (D-RNS) 302 supports the Serving RNS (S-RNS) 301 by providing radio resources as shown in Fig. 3. Respective RNCs are called Serving RNC (S-RNC) and Drift RNC (D-RNC). It is also possible and often the case that C-RNC and D-RNC are identical and therefore abbreviations S-RNC or RNC are used.

*EVOLVED UTRAN ARCHITECTURE*

Currently, the feasibility study for UTRAN Architecture Evolution from the current R99/4/5 UMTS architecture is ongoing (see 3GGP TSG RAN WG3: "Feasibility Study on the Evolution of the UTRAN Architecture", available at http://www.3gpp.org). Two general proposals for the evolved architecture (see 3GGP TSG RAN WG3, meeting #36, "Proposed Architecture on UTRAN Evolution", Tdoc R3-030678 and "Further Clarifications on the Presented Evolved Architecture", Tdoc R3-030688, available at http://www.3gpp.org) have emerged. The proposal entitled "Further Clarifications on the Presented Evolved Architecture" will be discussed in the following in reference to Fig. 4.

The RNG (Radio Network Gateway) 401 is used for interworking with the conventional RAN, and to act as a mobility anchor point meaning that once an RNG 401 has been selected for the connection, it is retained for the duration of the call. This includes functions both in control plane and user plane.

On the control plane the RNG 401 acts as a signaling gateway between the evolved RAN and the CN, and the evolved RAN and R99/4/5 UTRAN. It has the following main functions:

- Iu signaling gateway, i.e. anchor point for the RANAP (Radio Access Network Application Part) connection,

  - RANAP connection termination, including:

    - Setup and release of the signaling connections
    - Discrimination of connection less messages
    - Processing of RANAP connectionless messages,

  - Relay of idle and connected mode paging message to the relevant NodeB+(s),

- The RNG takes the CN role in inter NodeB+ relocations,
- User plane control and
- Iur signaling gateway between NodeB+ 402-405 and R99/4/5 RNC.

Further, the RNG is the user plane access point from the CN or conventional RAN to the evolved RAN. It has the following user plane functions:

- User plane traffic switching during relocation,
- Relaying GTP (GPRS tunneling protocol on the Iu interface) packets between NodeB+ and SGSN (Serving GPRS Support Node, an element of the CN) and
- Iur interworking for user plane.

The NodeB+ 402-405 element terminates all the RAN radio protocols (Layer 1 - Physical Layer, Layer 2 - Medium Access Control and Radio Link Control sub-layers, and Layer 3

- Radio Resource Control). NodeB+ 402-405 control plane functions include all the functions related to the control of the connected mode terminals within the evolved RAN. Main functions are:

- Control of the UE,
- RANAP connection termination,

  - Processing of RANAP connection oriented protocol messages

- Control / termination of the RRC (Radio Resource Control) connection and
- Control of the initialization of the relevant user plane connections.

The UE context is removed from the (serving) NodeB+ when the RRC connection is terminated, or when the functionality is relocated to another NodeB+ (serving NodeB+ relocation). Control plane functions include also all the functions for the control and configuration of the resources of the cells of the NodeB+ 402-405, and the allocation of the dedicated resources upon request from the control plane part of the serving NodeB+. The "+" in the term "NodeB+" expresses the enhanced functionality of the base station in comparison to the R99/4/5 specifications.

User plane functions of the NodeB+ 402-405 include the protocol functions of PDCP (Packet Data Convergence Protocol), RLC (Radio Link Control) and MAC (Media Access Control) and Macro Diversity Combining.

*ENHANCED UPLINK DEDICA TED CHANNEL (E-DCH)*

Uplink enhancements for Dedicated Transport Channels (DTCH) are currently studied by the 3GPP Technical Specification Group RAN (see 3GPP TR 25.896: "Feasibility Study for Enhanced Uplink for UTRA FDD (Release 6)", available at http://www.3gpp.org). Since the use of IP-based services becomes more important, there is an increasing demand to improve the coverage and throughput of the RAN as well as to reduce the delay of the uplink dedicated transport channels. Streaming, interactive and background services could benefit from this enhanced uplink.

One enhancement is the usage of adaptive modulation and coding schemes (AMC) in connection with Node B controlled scheduling, thus an enhancement of the Uu interface. In the existing R99/R4/R5 system the uplink maximum data rate control resides in the RNC. By relocating the scheduler in the Node B the latency introduced due to signaling on the interface between RNC and Node B can be reduced and thus the scheduler is able to respond faster to temporal changes in the uplink load. This will reduce the overall latency in communications of the UE with the RAN. Therefore Node B controlled scheduling is capable of better controlling the uplink interference and smoothing the noise rise variance by allocating higher data rates quickly when the uplink load decreases and respectively by restricting the uplink data rates when the uplink load increases. The coverage and cell throughput may be improved by a better control of the uplink interference.

Another technique, which may be considered to reduce the delay on the uplink, is introducing a shorter TTI (Transmission Time Interval) length for the E-DCH compared to other transport channels. A TTI length of 2ms is currently investigated for use on the E-DCH, while a TTI of 10ms is commonly used on the other channels. Hybrid ARQ, which was one of the key technologies in HSDPA, is also considered for the enhanced uplink dedicated channel. The hybrid ARQ protocol between Node B and UE allows for rapid retransmissions of erroneously received data units, thus reducing the number of RLC (Radio Link Control) retransmissions and the associated delays. This can improve the quality of service experienced by the end user.

To support enhancements described above, a new MAC sub-layer is introduced which will be called MAC-eu in the following (see 3GPP TSG RAN WG1, meeting #31, Tdoc R01-030284, " Scheduled and Autonomous Mode Operation for the Enhanced Uplink"). The entities of this new sub-layer, which will be described in more detail in the following sections, may be located in UE and Node B. On UE side, the MAC-eu performs the new task of multiplexing upper layer data (e.g. MAC-d) data into the new enhanced transport channels and operating HARQ protocol transmitting entities.

*E-DCH MAC ARCHITECTURE AT THE UE*

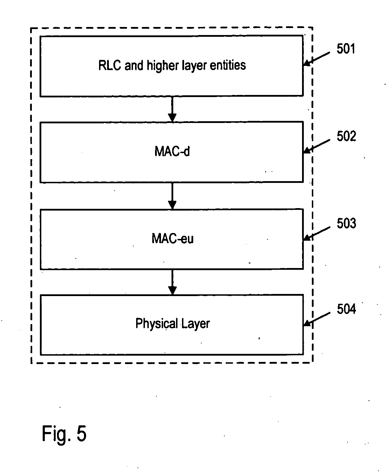

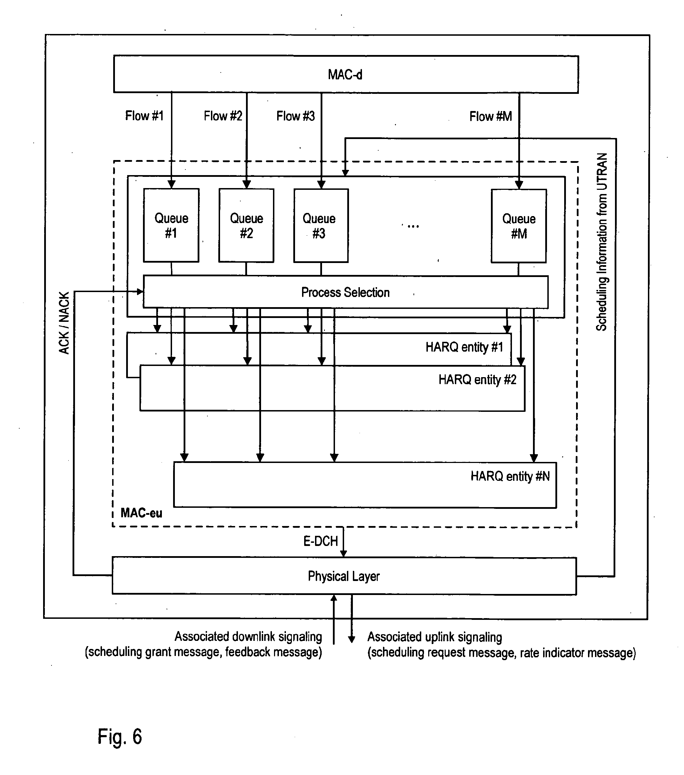

Fig. 5 shows the exemplary overall E-DCH MAC architecture on UE side. A new MAC functional entity, the MAC-eu 503, is added to the MAC architecture of Rel/99/4/5. The MAC-eu 503 entity is depicted in more detail in Fig. 6.

There are M different data flows (MAC-d) carrying data packets to be transmitted from UE to Node B. These data flows can have different QoS (Quality of Service), e.g. delay and error requirements, and may require different configurations of HARQ instances. Therefore the data packets can be stored in different Priority Queues. The set of HARQ transmitting and receiving entities, located in UE and Node B respectively will be referred to as HARQ process. The scheduler will consider QoS parameters in allocating HARQ processes to different priority queues. MAC-eu entity receives scheduling information from Node B (network side) via Layer 1 signaling.

*E-DCH MAC ARCHITECTURE AT THE UTRAN*

In soft handover operation the MAC-eu entities in the E-DCH MAC Architecture at the UTRAN side may be distributed across Node B (MAC-eub) and S-RNC (MAC-eur). The scheduler in Node B chooses the active users and performs rate control by determining and signaling a commanded rate, suggested rate or TFC (Transport Format Combination) threshold that limits the active user (UE) to a subset of the TCFS (Transport Format Combination Set) allowed for transmission.

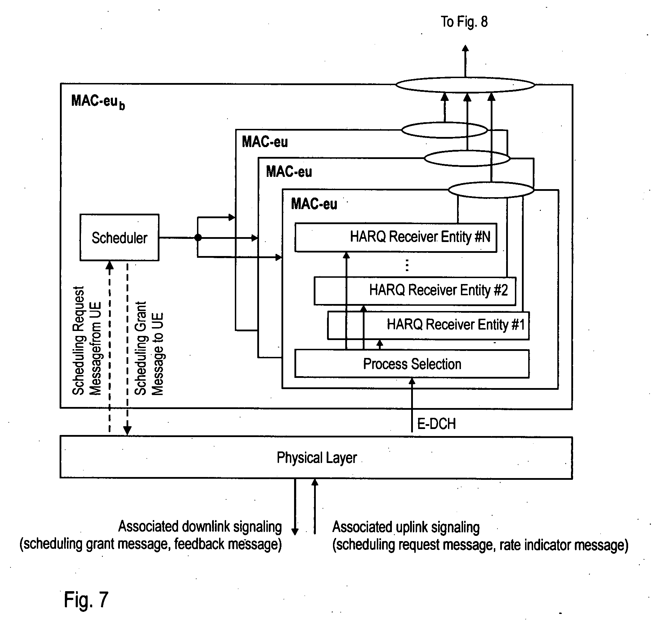

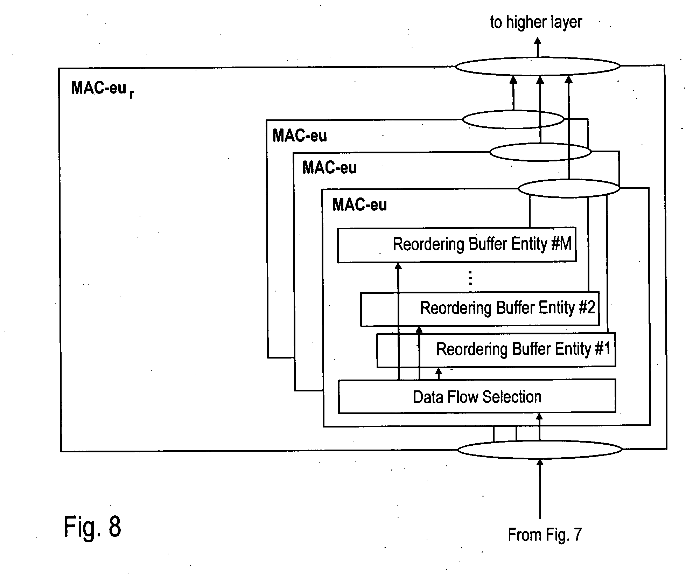

Every MAC-eu entity corresponds to a user (UE). In Fig. 7 the Node B MAC-eu architecture is depicted in more detail. It can be noted that each HARQ Receiver entity is assigned certain amount or area of the soft buffer memory for combining the bits of the packets from outstanding retransmissions. Once a packet is received successfully, it is forwarded to the reordering buffer providing the in-sequence delivery to upper layer. According to the depicted implementation, the reordering buffer resides in S-RNC during soft handover (see 3GPP TSG RAN WG 1, meeting #31: "HARQ Structure", Tdoc R1-030247, available of http://www.3gpp.org). Fig. 8 the S-RNC MAC-eu architecture which comprises the reordering buffer of the corresponding user (UE) is shown. The number of reordering buffers is equal to the number of data flows in the corresponding MAC-eu entity on UE side. Data and control information is sent from all Node Bs within Active Set to S-RNC during soft handover.

It should be noted that the required soft buffer size depends on the used HARQ scheme, e.g. an HARQ scheme using incremental redundancy (IR) requires more soft buffer than one with chase combining (CC).

*E-DCH SIGNALING*

E-DCH associated control signaling required for the operation of a particular scheme consists of uplink and downlink signaling. The signaling depends on uplink enhancements being considered.

In order to enable Node B controlled scheduling (e.g. Node B controlled time and rate scheduling), UE has to send some request message on the uplink for transmitting data to the Node B. The request message may contain status information of a UE e.g. buffer status, power status, channel quality estimate. Based on this information Node B can estimate the noise rise and schedule the UE. With a grant message sent in the downlink from Node B to the UE, Node B assigns the UE the TFCS with maximum data rate and the time intervals, the UE is allowed to send.

In the uplink UE has to signal Node B with a rate indicator message information that is necessary to decode the transmitted packets correctly, e.g. transport block size (TBS), modulation and coding scheme (MCS) level, etc. Furthermore, in case HARQ is used, the UE has to signal HARQ related control information (e.g. Hybrid ARQ process number, HARQ sequence number referred to as New Data Indicator (NDI) for UMTS Rel.5 , Redundancy version (RV), Rate matching parameters etc.)

After reception and decoding of transmitted packets on enhanced uplink dedicated channel (E-DCH) the Node B has to inform the UE if transmission was successful by respectively sending ACK/NAK in the downlink.

*MOBILITY MANAGEMENT WITHIN R99/4/5 UTRAN*

In this section some frequently used terms will be briefly defined and some procedures connected to mobility management will be outlined (see 3GPP TR 21.905: "Vocabulary for 3GPP Specifications" available at http://www. 3gpp.org).

A radio link may be a logical association between single UE and a single UTRAN access point. Its physical realization comprises radio bearer transmissions.

A handover may be defined as transfer a user's connection from one radio bearer to another. In a "hard handover" of a new radio link is established. In contrast, during "soft handover" (SHO) radio links are established and abandoned such that the UE always keeps at least one radio link to the UTRAN. Soft handover is specific for networks employing Code Division Multiple Access (CDMA) technology. Handover execution is commonly controlled by S-RNC in mobile radio network.

The "active set" comprises a set of radio links simultaneously involved in a specific communication service between UE and radio network, e.g. during soft handover, the UE's active set comprises all radio links to the RAN's Node Bs serving the UE.

Active set update procedures may be used to modify the active set of the communication between UE and UTRAN. The procedure may comprise three functions: radio link addition, radio link removal and combined radio link addition and removal. The maximum number of simultaneous radio links is commonly set to four. New radio links may be added to the active set once the pilot signal strengths of respective base stations exceed certain threshold relative to the pilot signal of the strongest member within active set. A radio link may be removed from the active set once the pilot signal strength of the respective base station exceeds certain threshold relative to the strongest member of the active set.

The threshold for radio link addition may be typically chosen to be higher than that for the radio link deletion. Hence, addition and removal events form a hysteresis with respect to pilot signal strengths.

Pilot signal measurements are reported to the network (S-RNC) from UE by means of RRC signaling. Before sending measurement results, some filtering is usually performed to average out the fast fading. Typical filtering duration is about 200 ms and it contributes to handover delay (see 3GPP TS 25.133: "Requirements for Support of Radio Resource Management (FDD)", available at http://www. 3gpp.org). Based on measurement results, S-RNC may decide to trigger the execution of one of the functions of active set update procedure (addition / removal of a Node B to / from current Active Set).

*E-DCH - OPERATION DURING SOFT HANDOVER*

Supporting soft handover is desirable to obtain the macro diversity gain. In HSDPA for example no soft handover is supported for the HS-DSCH (High Speed Downlink Shared Channel) transport channel. Applying soft handover causes the problem of distributing scheduling responsibilities across all Node Bs of the active set and would require extremely tight timing to provide the scheduling decision to all members of the active set even if distribution of scheduling function were resolved. Only one Node B is transmitting on HS-DSCH to a UE and thus no macro diversity gain is exploited. When UE enters soft handover region for dedicated channels, the Node B, which is allowed to transmit on HS-DSCH, has to be determined. The selection of serving Node B may be done from either the UE side or from network side (by RNC).

In the Fast Cell Selection (FCS) method for HS-DSCH, the UE selects the cell that is the most suitable for transmitting data. UE periodically monitors the channel conditions in the cells within the active set to check whether there is a cell with better channel conditions than the current serving cell.

In case soft handover is not supported for the uplink, a serving Node B has to be selected. One problem, which might occur, is inaccurate selection of the serving Node B. Thus there may be a cell within active set more suitable for uplink transmission than the chosen uplink serving Node B. Therefore, data transmission to a cell controlled by current serving Node B could fail, whereas the transmission to the cells controlled by other Node Bs would have been successful. The accuracy of the selection depends on several factors like signaling delay, filtering of measurement results etc.

To conclude, supporting SHO operation for E-DCH is useful because of macro diversity gain and because possible transmission failures due to an inaccurate selection of the best uplink serving Node B can be eliminated.

*HARQ OPERATION IN SOFT HANDOVER*

In case of HARQ is employed during soft handover, UE in the uplink transmits to a multiplicity of Node Bs. One of the main problems for HARQ operation during soft handover is the synchronization of the HARQ soft buffers between multiple Node Bs. Not all active set Node Bs may be able to receive the associated control signaling from the UE, which is needed for a correct processing of the received packet. The corresponding Node B, which will be referred to as the best uplink Node B, is able to receive and decode the packets correctly whereas other Node Bs within the active set most likely do not successfully receive some packets.

A diversity gain from soft handover may be possible since the uplink radio channels corresponding to Node Bs within Active Set are uncorrelated. During SHO and in the uplink direction, the packets received by different Node Bs may be routed to S-RNC for combining (see H. Holma, A. Toskala, "WCDMA for UMTS", John Wiley, 2000). This may be typically done such that some frame reliability indicator is used to select the best frame out of all the candidates in S-RNC.

*IUB/IUR INTERFACE SIGNALING*

Assuming that the MAC-eu protocol is terminated at the S-RNC, the S-RNC may filter received information and may update the contents and indices of the reordering buffer accordingly. In case of asynchronous signaling, filtering may be based on sequence numbers. Correctly received packets should then be placed at the appropriate positions of the reordering buffer.

It is noted that the support of enhanced dedicated uplink channel operation during soft handover may require some additional lub/lur signaling traffic compared to the signaling amount in previous 3GPP releases. As described above all Node Bs within Active Set have to signal control information and data packets over the lub/lur interface to S-RNC. For example signaling was required for outer loop power control and soft handover operation of uplink dedicated channels in previous 3GPP releases (Rel99/4/5).

Outer loop power control may be supported by dedicated channels and the Downlink Shared Channel (DSCH). The motivation is to maintain a certain QoS (Quality of service) for the different services (e.g speech, streaming) through the lifetime of a connection by controlling the transmitted power.

In closed-loop power control in the uplink, Node B may perform frequent estimates of the received Signal-to-Interference Ratio (SIR) and may compare these estimates with the corresponding target SIR set by S-RNC. The S-RNC may send a target SIR to Node B. The DCH FP (frame protocol) provides the transport of outer loop power control information between S-RNC and Node B (see 3GPP TS 25.427, "UTRAN lub/lur interface user plane protocol for DCH data streams", available at http://www.3gpp.org).

The frequency of the outer loop power control may be 10-100Hz. Further lub/lur signaling may be required during soft handover operation in the uplink Node Bs within the active set send the received packets to the S-RNC. The header of these packets may contain some information about the quality of the received packets (Quality indicator). S-RNC may choose the packet with the best quality indicator, which is commonly called selection combining (see H. Holma, A. Toskala, "WCDMA for UMTS", John Wiley, 2000, chapter 3.6).

It may be noted that there is already a considerably large amount of signaling over lub/lur interfaces necessary in UMTS R99/4/5.

Moreover, an expensive part of the infrastructure deployment is the so called "last mile" where the Node B is connected to the network. Compared to other wired links within the network this link may be of relatively small bandwidth. Usually there is no traffic multiplexing with other traffic possible and the required bandwidth is defined only by the traffic to be transmitted between the Node B and the RNC.

New functionality is frequently added to the Node Bs such as an improved downlink transmission by HSDPA or Enhanced uplink transmission in future. These enhancements will increase the system throughput over the air and will thus increase the traffic on Iub/Iur interfaces.

*SUMMARY OF THE INVENTION*

The object of the present invention is to reduce the signaling load on the wired interface between a base station and a control unit. Taking the UTRAN as an example, the object may be understood as to decrease lub/lur user traffic on the "last mile" to the Node B, i.e. the link connecting the Node B with the RNC or a next hop. A solution for this object may reduce the infrastructure investment of an operator.

The object is solved by the invention as defined in ,the independent claims. Further embodiments of the present invention are defined in the dependent claims.

According to the present invention a serving base station may be selected for communications on the wired interface between the respective base station and the next hop, such as a control unit, in order to minimize traffic over the "last mile". According to a further embodiment, a control unit such as an RNC may choose the optimal serving Node B based on specified selection criteria as will be outlined in the following. Taking a UMTS architecture as an example for a mobile communication network, initially only one Node B from the active set, the so-called serving Node B, may send data packets and/or control packets to an RNC to minimize the amount of lub/lur signaling during soft handover. The serving Node B may correspond to the base station that has the highest likelihood of correctly receiving data packet from a UE of all Node Bs within active set. Its selection may thereby be based on measurements of the uplink channel quality. In case serving base station fails to receive packet correctly, the other Node Bs may be asked to send packets to the control unit.

According to one embodiment, the present invention provides a method for controlling a plurality of base stations in a mobile communication system comprising a communication terminal, the plurality of base stations and a control unit connected to the plurality of base stations. According to the method, the communication terminal may be in communication with the plurality of base stations during a soft handover. It should be noted that the plurality of base stations may not refer to all base stations that are controlled by a control unit or a plurality of control units in the mobile communication network, but rather to the base stations communicating with the communication terminal during soft handover. In UMTS this plurality of base stations may be referred to as the active set of the communication terminal. Hence, the plurality of base stations may be a subset of the base stations available for communication in the mobile communication network.

For each base station of the plurality of base stations, an uplink channel quality characteristic between the communication terminal and the respective base station may be evaluated, and the base station having the best uplink channel quality characteristic may be determined.

Further, the determined base station as the serving base station may be, and some or all base stations other than the serving base station may be controlled so that they do not have to forward data packets received from the communication terminal to the control unit during the soft handover. In other words only a subset of the plurality of base stations including the serving base station or serving Node B may forward a correctly received data packet or control information, e.g. in form of a notification to the control unit, e.g. an RNC.

According to another embodiment a data packet from the communication terminal may be received at the plurality of base stations, and data integrity of the received data packet may be checked at each of the plurality of base stations. If data integrity of the received data packet was confirmed by a base station controlled to forward the received data packet to the control unit, the received data packet and/or a control packet may be transmitted from the respective base station to the control unit, wherein the control packet acknowledges the correct reception of said data packet.

Further, in another embodiment of the present invention, if data integrity of the received data packet was not acknowledged by a base station, a notification from the respective base station is transmitted to the control unit, wherein the notification indicates that data integrity of the received data packet was not acknowledged by the respective base station.

In a further embodiment of the present invention only the serving Node B is allowed to communicate with the control unit, i.e. all other base stations of the active set or plurality of base stations are not allowed to transmit any data related to a received data packet to the control unit, e.g. the lur/lub interface. If data integrity of the received data packet was not acknowledged by the serving base station, it may transmit a notification to the control unit, wherein the notification indicates that data integrity of the received data packet was not acknowledged by the serving base station.

In response to receiving the notification from the serving base station, the control unit may transmit a status request relating to the received data packet from the other base stations than that selected base station, and may receive in turn status reports relating to the received data packet from the other base stations, wherein the status report indicates whether data integrity of the data packet was confirmed at the respective base station or comprises the received data packet.

According to a further embodiment, the notification and said status report are transmitted to the control unit in at least one frame protocol (FP) control frame or by radio network signaling over a wired interface. In UMTS the radio network signaling over a wired interface may be referred to as the RNSA or NBAP (Radio Network Subsystem Application Part or Node B Application Part) protocol messages.

As most parameters that may be considered when choosing the serving Node B are readily available at the RNC, the selection of the serving base station may be executed by the control unit.

The uplink channel quality characteristic considered in the selection process of the serving base station may be determined based on at least one of a path loss for an uplink channel between the communication terminal and the respective base station, closed loop power control commands transmitted by a base station to the communication terminal, and uplink interference.

Further, the selection of the serving base station is periodically triggered by a configurable timer. Hence, by periodically reconsidering the selection of the serving base station, it may be possible to adapt to changing uplink channel conditions by selecting a new serving Node B if necessary.

The timer value may be signaled to said serving base station within a radio link addition function or a combined radio link addition and removal function.

Further, the timer value may be signaled to said serving base station in an information element of an NBAP or RNSAP radio link setup request message.

In the step of evaluating an uplink channel quality characteristic parameters indicating the uplink channel quality may be averaged over a configurable time interval. The time interval may be configured by at least one signaling message of a radio resource control (RRC) protocol or at least one system-specific control plane protocol message. The interval may be selected by taking into account the velocity in a movement of the communication terminal, the signaling delay between the control unit and a base station (e.g. UMTS lub interface between Node B and RNC), and the signaling delay between different control units in the mobile communication system (e.g. UMTS lur interface between RNCs).

In case the control unit decided to select a new base station of said plurality of base stations as the serving base station, the control unit may transmit a selection command to the new serving base station upon selection. Further, the selection command may be also transmitted to the previous serving base station.

The selection command indicates an activation time at which the new serving base station should start forwarding successfully received data packets, control packets or notifications to the control unit and at which the previous serving base station should stop forwarding the successfully received data packets, control packets or notifications to the control unit. This may be of importance, in order to prevent a packet loss during soft handover due to an unsynchronized change of the serving Node B. Further, according to another embodiment, the previous or "old" serving base station and the newly selected serving base station may both forward data packets, control packets and notifications to the control unit for a predetermined time interval or until the previous serving base station receives a separate command from the control unit to stop forwarding.

Moreover, in another embodiment the previous serving base station and the control unit may negotiate the activation time by exchanging control messages.

Such a control message may be one of a radio link reconfiguration message, an activation time negotiation request message, or an activation time confirmation message of NBAP or RNSAP protocols.

According to another embodiment, this invention may be applied to the evolved UTRAN architecture. Hence, the present invention provides a method for controlling a plurality of base stations in a mobile communication system comprising a communication terminal, the plurality of base stations and a gateway interconnecting the mobile communication network to a fixed communication network. In the evolved UTRAN architecture this gateway may be the RNG. The communication terminal may be in communication with the plurality of base stations during a soft handover. Again, it should be noted that the plurality of base stations may not refer to all base stations that are controlled by a control unit or a plurality of control units in the mobile communication network, but rather to the base stations communicating with the communication terminal during soft handover. In UMTS this plurality of base stations may be referred to as the active set of the communication terminal. Hence, the plurality of base stations may be a subset of the base stations available for communication in the mobile communication network.

For each base station of the plurality of base stations, an uplink channel quality characteristic between the communication terminal and the respective base station may be evaluated and the base station having the best uplink channel quality characteristic may be determined. Further, the determined base station may be selected as the serving base station.

Some or all base stations other than the serving base station may be controlled not to forward data packets received from the communication terminal to the gateway unit during the soft handover.

In a further embodiment a data packet from the communication terminal may be received at the plurality of base stations, and its data integrity may be checked upon reception at each of the plurality of base stations.

If data integrity of the received data packet was confirmed by a base station controlled to forward the received data packet to the gateway, the received data packet may be transmitted from the respective base station to the gateway.

If data integrity of the received data packet was not acknowledged by the serving base station, the serving, base station may transmit a status request relating to the received data packet to the other base stations than the serving base station, and in turn may receive status reports relating to the received data packet from the other base stations, wherein the status report indicates whether data integrity of the data packet was confirmed at the respective base station or comprises the received data packet.

The notification and the status report may be transmitted to the serving base station in at least one frame protocol control frame or by radio network signaling messages over a wired interface.

Further, in another embodiment of the present invention the step of selecting the serving base station is executed by the current serving base station.

Independent of the employed UTRAN architecture, the uplink channel quality characteristic may determined based on at least one of a path loss for an uplink channel between the communication terminal and the respective base station, closed loop power control commands transmitted by a base station to the communication terminal, and uplink interference according to another embodiment of the present invention.

Further, the selection of the serving base station may be independent from uplink data channel air interface transmission.

The evaluation of an uplink channel quality characteristic may comprise averaging parameters indicating the uplink channel quality over a configurable time interval.

According to another embodiment of the present invention, the selection of the serving base station may be periodically triggered by a configurable timer. The time interval may be configured by radio resource control signaling or another system specific control plane protocol. Moreover, the time interval may be selected taking into account the velocity in a movement of the communication terminal, and the signaling delay between at least two base stations of the plurality of base stations.

In another embodiment, the current serving base station may transmit a selection command to the new serving base station upon selection. The selection command may indicate an activation time at which the new serving base station should start forwarding the successfully received data packets to a gateway interconnecting the mobile communication network to a fixed communication network, and at which the previous serving base station should stop forwarding the successfully received data packets to the gateway. The selection command may be transmitted in an information element of NBAP or RNSAP message.

Again independent of the UTRAN architecture, the previous or current serving base station and the new serving base station may continue their serving base station functionality in parallel for a predetermined time period as already outlined above.

According to another embodiment, the received data packet may be transmitted in at least one frame protocol data frame and the control packet and/or the notification is transmitted in at least one frame protocol control frame.

Further, the present invention provides a base station and a control unit which are adapted to implement the controlling methods as outlined above.

According to another embodiment, the present invention further provides method for signaling uplink channel quality characteristics from a communication terminal to a control unit in a mobile communication system comprising the communication terminal, a plurality of base stations and the control unit connected to the plurality of base stations. According to the method, the communication terminal is in communication with the plurality of base stations during a soft handover, and the method is specifically adapted to the control of the plurality of base stations according the controlling method as described above. For example for the evolved UTRAN architecture, according to another embodiment, the present invention provides a method for signaling uplink channel quality characteristics from a communication terminal to a base station in a mobile communication system comprising the communication terminal and a plurality of base stations The communication terminal is again in communication with said plurality of base stations during a soft handover and the method may be specifically adapted to the control of said plurality of base stations according the method discussed above.

Further the method may comprise the step of receiving power control commands from the plurality of base stations. For each base station of the plurality of base stations, the communication terminal may determine a channel quality characteristic related to each base station based on the power control commands received from the respective base station. The communication terminal may further transmit the determined channel quality characteristics to the control unit via a base station, or to the serving base station wherein the determined channel quality characteristics are considered by the control unit or the serving base station to select a serving base station. Further it is noted that these combined power control commands, i.e. the determined channel quality characteristics may be transmitted to the network on an uplink control channel.

When determining the channel quality characteristic for each base station the communication terminal may combine the power commands received from the respective base station over a configurable time period.

Moreover, the present invention relates to a communication terminal in a mobile communication system, wherein the communication terminal comprises means for implementing the methods described above.

Finally the present invention provides a mobile communication system comprising a communication terminal as outlined above, a plurality of base stations and at least one control unit as outlined above connected to the plurality of base stations. The communication terminal may be in communication with the plurality of base stations during a soft handover, wherein the plurality of base stations may comprise at least one base station as outlined above.

## *BRIEF DESCRIPTION OF THE FIGURES*

In the following the present invention is described in more detail in reference to the attached figures and drawings. Similar or corresponding details in the figures are marked with the same reference numerals.

**Fig. 1**     shows the high-level architecture of UMTS,

**Fig. 2**     shows the architecture of the UTRAN according to UMTS R99/4/5,

**Fig. 3**     shows a Drift and a Serving Radio Subsystem,

**Fig. 4**     shows the evolved UTRAN architecture.

**Fig. 5**     shows the E-DCH MAC architecture at a UE,

**Fig. 6**     shows the MAC-eu architecture at a UE,

**Fig. 7**     shows the MAC-eu architecture at a Node B,

**Fig. 8**     shows the MAC-eu architecture at an RNC,

**Fig. 9**     shows a system level illustration of the UTRAN according to an embodiment of the present invention,

**Fig. 10**     shows the operation of a control unit according to an embodiment of the present invention,

**Fig. 11**     shows a flow chart of a serving base station selection by a control unit according to an embodiment of the present invention, and

**Fig. 12**     shows a switching procedure of the serving Node B according to an embodiment of the present invention.

## *DETAILED DESCRIPTION OF THE INVENTION*

Before proceeding with the detailed description of the embodiments, the meaning of synchronous and asynchronous signaling in the context of this application will be briefly outlined. Signaling, in particular Iub/Iur signaling, may be synchronous if a control unit such as an RNC simultaneously receives identical data packets from the Node Bs within active set or identifies the identical data packets based on the timing of their reception, e.g. based on a predetermined time offset depending on a particular Node B and signaling delays.

When employing asynchronous signaling it is generally impossible to receive the identical packets simultaneously or with a predetermined time offset. Hence, in case of asynchronous signaling, the packets may be accompanied by an additional identification, e.g. by a sequence number which identifies their order. However, for the operation of a reordering buffer the sequence numbers may be required. The sequence numbers may be used for correct positioning of newly received packets in the reordering buffer. If the reordering buffer is located in an RNC, the data packets may be accompanied by respective sequence numbers for both synchronous and asynchronous signaling. Thus, the invention as described in the following sections is applicable to both synchronous and asynchronous signaling.

During soft handover packets transmitted on a dedicated channel such as the E-DCH may be received and decoded by all Node Bs in the active set. In the present invention one serving Node B is selected for data and control information transmission on the wired interface between the respective Node B and an RNC. By controlling the Node Bs in the active set such that only a subset or preferably one single serving Node B forwards data packets received from a communication terminal to a base station via the wired interface, such as Iur/Iub in UMTS, to a controlling unit, the signaling on the wired interfaces between the Node Bs and the RNC may be reduced since only a subset or preferably one single serving base station may transmit data on the wired interface to the control unit.

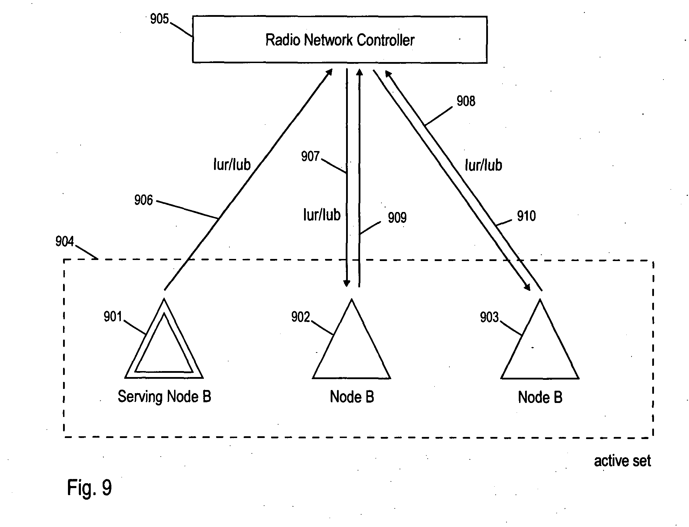

The RNC may select this serving Node B among the active set Node Bs based on certain criteria. The corresponding cell of the serving Node B will be referred to as serving cell. In Fig. 9 a system level illustration of an embodiment of the present invention is shown. Though, the embodiment describes the present invention in relation to a UMTS architecture as known from R99/4/5, it is noted that the principles underlying the present invention may also be applied to other RAN architectures.

The base stations 901, 902 and 903 of the UE's active set 904 are all connected to the RNC 905 via a Iur/Iub interface. Upon receiving a data packet from a communication terminal via the air interface the Node Bs 901, 902, and 903 verify the data integrity of the received data packet. This may e.g. be done by decoding the received data packet and performing a CRC check. In case the received data packet has been successfully received by the serving Node B 901, same may forward the data packet to the RNC 905. In case data integrity of the received data packet could not be confirmed by the serving Node B 901, a notification indicating the reception of a corrupted data packet may be indicated to the RNC 905. The transmission of the appropriate information for each of these two cases is indicated by the arrow 906.

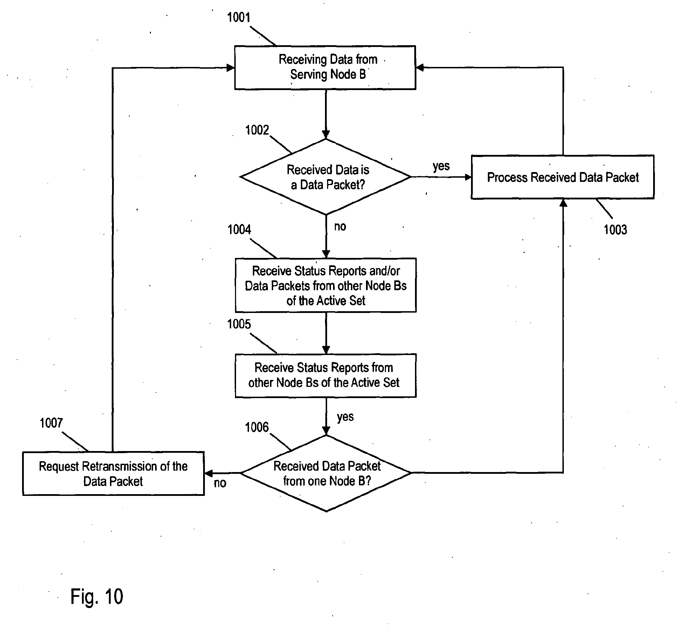

The operation of the RNC 905 in response to receiving the information will be explained in reference to Fig. 10. Upon receiving data at the RNC 905 in step 1001, the RNC 905 will check whether it received a data packet from the serving Node B 901 or a notification indicating the reception of an erroneous data packet in step 1002. In case the RNC 905 received a data packet that was correctly received by the serving Node B 901, the data packet may be further processed by the RNC 905 in step 1003.

In case the RNC 905 received a notification, it may send a status request message to all Node Bs 902, 903 other than the serving Node B 901, to check, whether one of those base stations 902, 903 correctly received the data packet (see arrows 907 and 908 in Fig. 9) in step 1004.

In case a Node B 902, 903 received the data packet uncorrupted, the respective Node B may send the data packet to the RNC 905 directly or comprised in a status report. In case the data packet has not been received correctly by the respective Node B a status report indicating this circumstance is transmitted (see arrows 909 and 910 in Fig. 9). The RNC 905 may receive the status reports (or the data packet) in step 1005 and if a data packet was received from one Node B (see block 1006), standard processing, e.g. the insertion of the packet in a reordering buffer and its further processing, may be applied in step 1003. In case none of the Node Bs 902, 903 received the data packet correctly, the retransmission of the data packet from the communication terminal may be requested in step 1007. As detailed in the co-pending application "Base Station Synchronization during Soft Handover" (attorney's docket number EP28260), filed at the same date as the present patent application, feedback may e.g. be sent from a single Node B that is optimally selected for downlink.

It is noted that in case the transmission of the data packet to serving Node B 901 within active set 904 fails, a macro diversity gain due to soft handover may be exploited.

If the correct reception of data packets transmitted in the serving cell of the serving Node B is very likely, the Iub/Iur traffic may be decreased significantly, as it will then be rarely the case that an RNC has to request a data packet from another Node B than the serving Node B (see step 1004 in Fig. 10). Therefore the appropriate selection of serving Node B cell should provide a high reliability of a correct reception of data packets. A possible parameter that may be used as a criterion for the selection of the serving Node B is the received signal strength or uplink channel quality.

As described in reference to Fig. 9 and Fig. 10, the serving Node B may report to the RNC if a data packet has been received correctly or incorrectly. In case of a correct reception, serving Node B transmits the received packet directly to the RNC upon correct reception. According to another embodiment the serving Node B may first notify the RNC of the correct reception using e.g. a notification message or control information and may then forward the received data packet. The interface signaling may be further reduced when sending a control packet or a notification informing the RNC about the correct reception is omitted in case of receiving an uncorrupted data packet at serving Node B.

Sending a control packet or a notification to RNC only in case of an incorrect reception of a packet may not only minimize the traffic on Iub/Iur interface, when taking a UMTS architecture of the RAN as an example, but also may reduce the soft handover delay. It is further noted that sequence numbers may be sent inband e.g. within frame protocol data frames. For example for HSDPA MAC-hs SDUs as defined in 3GPP TS 25.321, "Medium Access Control (MAC) Protocol Specification", available at http://www.3gpp.org., a sequence number is contained in the packet header. These MAC-hs SDUs sent over HS-DSCH FP. However, if some control channel for an uplink air interface signaling carries sequence numbers as well which is not the case for HSDPA, these sequence numbers may be sent outband, i.e. in separate control packets, e.g. within frame protocol control frames over the Iub/Iur interface. In latter case, data packets may be sent in frame protocol data frames. Finally, it is noted that data packets mentioned in the above procedures may be transmitted within data frames of the frame protocol (FP), while control packets or notifications may be transmitted within control frames of the frame protocol (FP). The selection of an appropriate serving cell may be of importance when trying to reduce the signaling on the wired interface between Node B and RNC. Therefore the determination of the criteria, the selection is based on, may be of vital importance in the present embodiment.

The serving cell for the wired interface (Iub/Iur) should provide a high probability of the correct reception of transmitted packets at the serving Node B. Therefore, one possibility may be to select a serving base station from the active set of a communication terminal during handover based on the path loss between UE and Node B. The path loss can be calculated based on the transmitted CPICH (Common Pilot Channel) power and received CPICH signal power. E.g. the path loss may be calculated as the primary CPICH transmission power minus the CPICH received signal code power (RSCP). The received signal code power may be the received power on one orthogonal code measured on the primary CPICH.

The UE may measure and report the calculated path loss to the network, e.g. by RRC control signaling or any other system-specific control plane signaling. In UMTS the primary CPICH transmission power and the CPICH received signal code power are available at the RNC, such that no additional signaling via the air and wired interface and processing time would be necessary to calculate the pass loss. Thus, the selection criterion may be suited for a so-called network-oriented decision mode where the RNC in the radio access network selects of the serving Node B.

Another alternative criterion for selecting serving Node B may be based on an evaluation of closed loop power control commands transmitted from each base station to the communication terminal. During soft handover operation, there may be several Node Bs in the UE's active set sending closed loop power control commands to the UE. The commands may be issued in the form "up" and "down" signals which indicate to the communication terminal to increase the transmit power on the uplink for a specified power step or to decrease transmit power on the uplink for a specified power step respectively. For example, the UE may combine the received commands by using majority logic or some other decision criteria which may be defined in the style as defined in H. Holma, A. Toskala, "WCDMA for UMTS", John Wiley, 2000, chapter 9.2.1.3.

The number of "up" and "down" commands received in a predefined time interval, which e.g. may be configured by RRC signaling from the RNC to the UE, may be used for selecting the serving Node B. A drawback of this approach may be that the measurement results, i.e. a combination of power control commands, on which the selection is based may not readily available in RNC, as for example when using the path loss measurements as a criterion. Hence, the UE may signal the measurement results via a Node B to the RNC. This may require more uplink capacity than only signaling newly selected serving Node B to RNC, e.g. by using signaling in accordance with RRC protocol. Hence, a selection based on evaluated power control commands may be suited for terminal-oriented decision mode, in which the communication terminal signals uplink channel quality characteristics to a control unit in the network, which are considered in the selection process of the serving base station.

The uplink interference in the Node B controlling the cell is not considered in using both above-specified criteria. Both criteria however may be thought of as being indices of uplink channel quality. Uplink interference may distort other transmissions by a UE or other users in the cell. Therefore in another embodiment of the present invention, a selection criterion depending on time, $SC(t)$, based on tradeoff between uplink reception reliability and control of uplink interference, i.e. related to radio resource management, may be defined. In general this trade-off may be described by Equation 1 wherein the extent of functional dependence of $SC(t)$ on uplink channel quality-related indices, $UCQ(t)$, and on radio resource management-related indices, $RRM(t)$, may be regulated by the parameter $a \in [0,1]$.

$$\text{Equation 1:} \qquad SC(t) = a * UCQ(t) + (1 - a) * RRM(t)$$

From Equation 1 it becomes clear that in case $a = 0$, the selection criterion is completely biased in favor of efficient uplink resource utilization and may yield no gain in decreasing Iub/Iur traffic. On the other hand, in case , $a = 1$ the selection criterion is utterly biased in favor of selecting serving Node B being most likely to receive the packet correctly. In latter case the present invention may provide maximum gain in decreasing Iub/Iur traffic. In a conceptual system employing this trade-off, the value of the parameter may be on a semi-static basis by RRC signaling or any other system-specific control plane signaling.

Further it is noted a term often associated with measurement of uplink interference may be noise rise, defined as the ratio of the total received wideband power to the noise power (H. Holma, A. Toskala, "WCDMA for UMTS", John Wiley, 2000., section 8.2.2.1).

A practical example of taking into account both channel quality and uplink capacity when defining the selection criteria could be to reuse a modified version of the existing PRACH (Physical Random Access CHannel) open loop power control procedure as defined in 3GPP TS 25.331: "Radio Resource Control (RRC); Protocol Specification", available at http//www.3gpp.org. In the modified procedure the initial power of PRACH preamble may calculated not only based on CPICH downlink transmit power and CPICH RSCP but also based on the amount of uplink interference.

According to a further embodiment, the control unit may periodically monitor the selection criteria for serving Node B and may initiate the selection of a new serving Node B in case the criteria and the related measurements indicate so. The periodicity of monitoring i.e. the frequency of selection a serving Node B may be determined and configured by RRC signaling on a semi static basis. On the other hand, as the measurement values e.g. path loss, may all be time variant, the RNC may perform some averaging before choosing a serving Node B in order to avoid a "ping-pong" effect. The time span the RNC averages (averaging length) out the parameters of the selection criteria may be configured by RRC signaling or any other system-specific control plane signaling on a semi-static basis. The efficiency of the signaling may strongly depend on the delay on the wired interface.

The frequency of selecting serving Node B may depend on the averaging length and the lub/lur signaling delay and may also be set by RRC or any other system-specific control plane signaling. The optimal averaging length may decrease with an increasing the time scale of channel variations. The optimal averaging length may also be defined such that "ping-pong" effect is prohibited. E.g. higher UE velocities may require a decreased averaging length. The value of the averaging length may set an upper bound on a feasible frequency in selecting serving Node B. The larger the averaging length is, the less frequent serving Node B selection may be. For example, for CPICH measurements in the RNC a typical filtering duration is about 200 ms.

The value of lub/lur signaling delay may set an upper bound on a feasible selection frequency. The larger the delay is, the less frequent serving Node B selection may be. A typical one way lub/lur delay may be about 100 ms.

It should be noted that according to an embodiment of the present invention the selection of serving Node B may be performed on a periodical basis and independently from data transmission in order to avoid large signaling delays. The selection may be periodical in that it may be performed after expiry of a timer. The selection may be independent of data transmission in that it may not consider over-the-air data reception. By making the reception independent of the data transmission/reception and periodical, it may be ensured that always one Node B at a time is defined as the serving Node B and possible additional delays are avoided. The value of a timer for triggering the selection of a serving base station may e.g. be set by the RNC and may be communicated to the Node Bs. The communication of the timer value may be established for example by means of signaling between the user part of the radio network subsystem and the Node B's application part (RNSAP/NBAP signaling). The present invention allows a signaling reduction during soft handover operation. Each Node B within the active set may be a potential serving Node B. The value of the timer may be signaled to a newly selected Node B to inform that base station about its selection. The selection command used to inform the new selected Node B may be signaled in active set radio link update functions, e.g. Radio Link (RL) Addition and Combined RL Addition and Removal functions.

An Information Element (IE) corresponding to the value of the timer may for example be contained in an NBAP/RNSAP RL Setup Request signaling message. It is noted that it is not required that the value of the timer is known at the Node Bs of the active set. However, it may be useful for the operation in scheduled mode, i.e. when Node B schedules packets on an uplink transport channel, e.g. E-DCH.

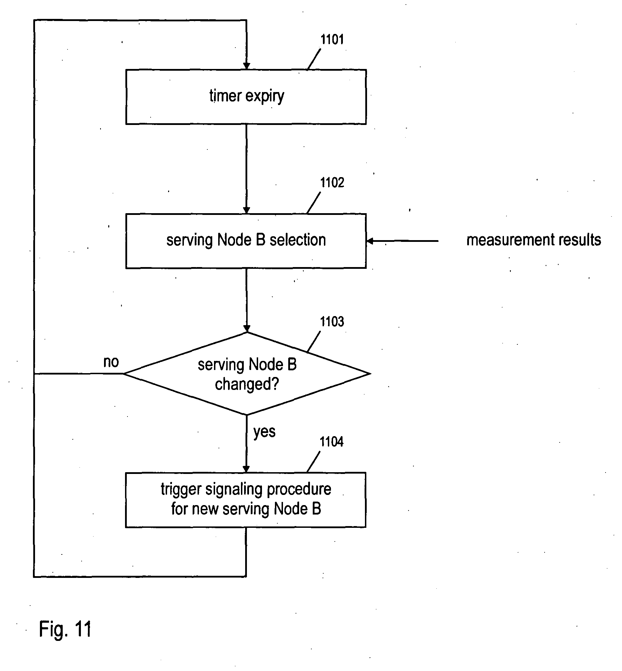

Fig. 11 shows a flow chart of a serving base station selection for network-oriented decision mode according to an embodiment of the present invention. Upon expiry of the timer (see step 1101), the control unit may perform a reselection of the serving base station relying on the measurement results in step 1102. In step 1103 it may be checked whether the newly selected serving base station is different from previous serving base station. If so, the control unit may signal to the old serving base station that it is no longer in charge of sending data and control packets to the control unit unless polled in step 1104. This selection command (or better deselection command in this case) may e. g. use an IE within RL Reconfiguration message of NBAP/RNSAP protocol. Simultaneously the control unit may inform the new serving base station of its decision, e.g. by using another IE within a RL Reconfiguration message. After selecting a serving base station in step 1102 the timer may be started again.

The switching from a previous serving Node B to the new serving Node B may be synchronized in order to avoid packet loss due to the switching. The switch from the previous serving Node B to the newly selected one may be performed simultaneously. This may be achieved e.g. by defining a so-called activation time by the RNC which may be signaled to the previous and the new serving Node B. For example, the activation time may be transmitted in an IE within RL Reconfiguration message. The activation time may define a point in time at which the previous serving Node B may stop sending data and control packets to the control unit and the new serving Node B may start sending data and control packets to the control unit.

According to another embodiment of the present invention, the previous serving Node B may continue to transmit data and control packets to the control unit while the new serving Node B is activated. For example upon receiving a corresponding command from the control unit or the new serving Node B or after expiry of a predetermined time period the previous serving Node B may stop to transmit data and control packets to the control unit. Hence, it may be possible that for a controllable time period both, the previous and the new serving Node B transmit data and control packets to the control unit simultaneously to prevent a packet loss due to designating the 'serving Node B's functionality from one base station to another.

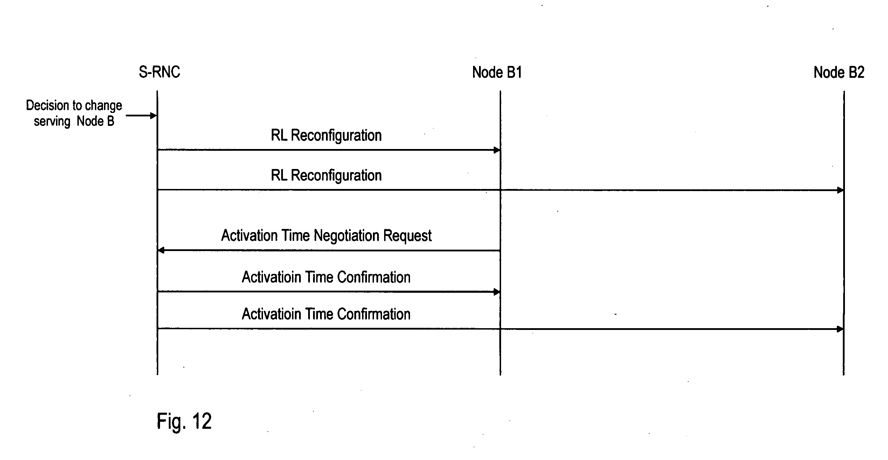

As mentioned before, selection may be independent of the over-the-air data transmission. Therefore, it may occur that activation time overlaps with current processing of data packets received at the active set's Node Bs when changing the serving Node B. Fig. 12 illustrates a switching procedure of the serving Node B according to an embodiment of the present invention. In case the serving RNC (S-RNC) has decided to switch the serving Node B from "old" serving Node B1 to new serving Node B1, it sends a RL Reconfiguration message to both base stations which may comprise an IE with the activation time, indicating the point in time when the Node B1 and Node B2 should switch their operating mode. The previous Node B1 may send an Activation Time Negotiation Request message containing an IE with a new proposed activation time to the serving S-RNC. The S-RNC may reply to this message by an Activation Time Confirmation message containing an IE with newly agreed activation time. The latter message may be sent to both the "old" serving Node B1 and the "new" serving Node B2 regardless of whether negotiation of the activation time has resulted in a change of the initially signaled activation time.

The Activation Time Negotiation Request message may be optional. If the negotiation is not actually carried out, the Activation Time Confirmation message may contain the unchanged value of the activation time. In principle, originally set activation time may be selected such that the switching from Node B1 to Node B2 occurs after reception of Activation Time Confirmation message with lub/lur delays taken into account.

The present invention has been discussed with mainly in reference to the UMTS Rel99/4/5 architecture. It is noted that the principles according to the present invention are also applicable to an evolved UTRAN architecture as described in the introduction. A possible gain in reducing signaling across evolved lur+ interfaces can be envisaged. In the following possible extension of the present invention as outlined above in reference to the evolved UTRAN architecture is provided.

As all radio-related functions may be moved to enhanced Node B+s, in a soft handover scenario a certain hierarchy between Node B+s may be defined. The RNG may not have any particular role in the present invention. Also, the definitions of measurements and selection criteria elaborated for Rel99/4/5 UTRAN architecture may be reused in a straight-forward manner for the evolved architecture. Furthermore, frequency of selecting serving Node B+ and related timing may be readily extended to the evolved architecture. The hierarchical distribution of responsibilities between Node B+s may be considered in certain changes to the selection procedures.

A serving Node B+ may be selected based on criteria elaborated above, e.g. on collected radio channel related measurements from the UE. As a modified RRC protocol may be terminated in Node B+s and UE, a Node B+ may be capable of considering the selection criteria as described above. It should be further noted that at the very beginning of the connection the UE may not be in a soft handover and hence the "serving Node B" at that point of time may be uniquely identified as the Node B+ it initially communicates with. Based on channel quality measurements, serving Node B+ may be changed following the decision of a Node B+ currently performing that function. This decision may be signaled to neighboring Node B+s by means of enhanced RNSAP (Radio Network Subsystem Application Part) protocol which may be terminated in Node B+s, or by means of control frames of enhanced frame protocol which may be also terminated in Node B+s. According to another embodiment relay-signaling through neighboring Node B+s may be used in the case that a newly selected serving Node B+ is not located in the immediate neighborhood of previous serving Node B+. It is further noted that activation time may be subject to changes based on the location of the newly selected Node B+. It is noted that enhanced protocols will be standardized by reusing current UMTS UTRAN protocols to the greatest possible extent. Therefore, the enhanced RNSAP protocol or enhanced frame protocol will be derived from UMTS UTRAN RNSAP and frame protocol by introducing necessary changes specific to the above described evolved architecture. RNSAP may be radio network signaling over the lur interface for the UMTS R99/4/5 architecture and may apply to the lur and lur+ interface signaling for the evolved UTRAN architecture.

Consequently, the procedure as defined in relation to the UMTS R99/4/5 architecture, may be easily extended so that currently serving Node B+ performs the function of S-RNC. The gain in reducing signaling over evolved lur+ interface may be larger compared to the gain associated with Rel99/4/5 architecture since no data may be signaled if serving Node B+ has received a data packet correctly. The packet may be merely forwarded to the RNG and subsequently to the core network. However, in case serving Node B+ has not received the packet correctly, it may poll other Node B+s to receive the data packets, e.g. using data frames of the enhanced frame protocol, and/or control packets e.g. using control frames of the enhanced frame protocol.

Moreover, it is noted that serving Node B selection during soft handover as outlined above is merely a preferred embodiment of the present invention and that the principles of this invention are generally applicable to various radio network architectures and different uplink transport channels being processed by a multiplicity of base stations to exploit macro diversity gain.

According to an embodiment of the present invention the MAC-eu protocol may be terminated in S-RNC during soft handover operation without decreasing generality of the invention. It is noted that minor changes in the proposed signaling procedures may be required in case the reordering buffer is located in the Node Bs. For example, it may not be necessary to signal sequence number in case lub/lur signaling is synchronous as described above.

In the copending patent application "Base Station synchronization during Soft Handover" (attorney's docket number EP28260), filed on the same date as the present patent application a method for synchronizing the soft buffer in Node Bs of an active set of a communication terminal during soft handover is proposed. According to one embodiment of this copending patent application, the amount of signaling on the lur/lub interface may be reduced by sending just a positive feedback messages to acknowledge received data packets during HARQ operation in soft handover. The Node Bs in an active set may inform each other only on acknowledged packets. Alternatively, reduction in the amount of signaling may be achieved by sending the feedback just from serving Node B for the wired interface as defined in this application to other Node Bs in a first step. In a second step, if that feedback was negative, i.e. a data packet has not been received correctly by a base station; a negative feedback may trigger reporting of successfully received packets among all Node Bs within active set. In case of an appropriate selection of the serving Node B for lub/lur interface only step one in the above procedure may be performed in most cases.

The copending patent application "Time monitoring of Packet Retransmissions during Soft Handover", filed on the same date as the present patent application (attorney's docket number EP28261) relates to scheduling and controlling data retransmissions in a mobile communication system.

The fact that a timer used for synchronization of soft buffer contents is near its expiry may be interpreted as deterioration of uplink radio link conditions of that particular Node B. The signaling of this information to support serving Node B reselection depends on the UTRAN architecture that is considered. For the R99/4/5 architecture, the information may be signaled from the current serving Node B to the RNC. For the evolved architecture, however, radio-related protocol entities may be located in Node B+s. It may be up to the current serving Node B+ to select new serving Node B+ and signal the decision to it. Therefore, in this case the fact that the timer in the current serving Node B+ is near its expiry may not have to be signaled to another network elements.

According to an embodiment of the present invention the possible negotiation of the activation time for serving Node B selection has been described. A possible interaction between the present invention and the copending patent application may consider the status of the timer for soft buffer synchronization before proposing a new activation time.

## Claims

1. A method for controlling a plurality of base stations in a mobile communication system comprising a communication terminal, said plurality of base stations and a control unit connected to said plurality of base stations, the communication terminal being in communication with said plurality of base stations during a soft handover, the method comprising the steps of:

   for each base station of said plurality of base stations, evaluating an uplink channel quality characteristic between said communication terminal and the respective base station,

   determine the base station having the best uplink channel quality characteristic,

   selecting the determined base station as the serving base station, and

   controlling some or all base stations other than the serving base station not to forward data packets received from said communication terminal to said control unit during the soft handover.

2. The method according to claim 1, further comprising the steps of:

   receiving a data packet from said communication terminal at said plurality of base stations,

   checking data integrity of said received data packet at each of said plurality of base stations, and

   if data integrity of said received data packet was confirmed by a base station controlled to forward said received data packet to said control unit, transmitting said received data packet and/or a control packet from the respective base station to said control unit, wherein the control packet acknowledges the correct reception of said data packet.

3.  The method according to claim 1 or 2, further comprising the step of:

    if data integrity of said received data packet was not acknowledged by a base station, transmitting a notification from the respective base station to said control unit, wherein the notification indicates that data integrity of said received data packet was not acknowledged by said respective base station.

4.  The method according to claim 1 or 2, further comprising the step of:

    if data integrity of said received data packet was not acknowledged by said serving base station, transmitting a notification from said serving base station to said control unit, wherein the notification indicates that data integrity of said received data packet was not acknowledged by said serving base station.

5.  The method according to claim 4, further comprising the steps of:

    in response to receiving said notification from said serving base station, said control unit transmitting a status request relating to said received data packet from the other base stations than that selected base station, and

    receiving status reports relating to said received data packet from said other base stations, wherein said status report indicates whether data integrity of said data packet was confirmed at the respective base station or comprises said received data packet.

6.  The method according to one of claims 3 to 5, wherein said notification and said status report are transmitted to the control unit in at least one frame protocol control frame or by radio network signaling messages over a wired interface.

7.  The method according to one of claims 1 to 6, wherein said step of selecting the serving base station is executed by said control unit.

8.  The method according to one of claims 1 to 7, wherein said selection of the serving base station is periodically triggered by a configurable timer.

9.  The method according to claim 8, wherein said timer value is signaled to said serving base station within a radio link addition function or a combined radio link addition and removal function.

10. The method according to claim 8 or 9, wherein said timer value is signaled to said serving base station in an information element of an NBAP or RNSAP radio link setup request message.

11. The method according to claim 1 to 10, wherein the step of evaluating an uplink channel quality characteristic comprises averaging parameters indicating the uplink channel quality over a configurable time interval.

12. The method according to claim 11, wherein said time interval is configured by at least one signaling message of a radio resource control protocol or at least one system specific control plane protocol message.

13. The method according to claim 11 or 12, wherein said time interval is selected taking into account the velocity in a movement of said communication terminal, the signaling delay between said control unit and a base station, and the signaling delay between different control units in the mobile communication system .

14. The method according to one of claims 1 to 13, wherein said control unit transmits a selection command to the new serving base station upon selection.

15. The method according to claim 14, wherein said control unit further transmits the selection command to the previous serving base station.

16. The method according to claim 14 or 15, wherein the selection command indicates an activation time at which the new serving base station should start forwarding the successfully received data packets, control packets or notifications to said control unit and at which the previous serving base station should stop forwarding the successfully received data packets, control packets or notifications to said control unit.

**17.** The method according to claim 16, wherein the previous serving base station and said control unit negotiate said activation time by exchanging control messages.

**18.** The method according to claim 17, wherein said control message is one of a radio link reconfiguration message, an activation time negotiation request message, and an activation time confirmation message of NBAP or RNSAP protocols.

**19.** A method for controlling a plurality of base stations in a mobile communication system comprising a communication terminal, said plurality of base stations and a gateway interconnecting said mobile communication network to a fixed communication network, the communication terminal being in communication with said plurality of base stations during a soft handover, the method comprising the steps of:

for each base station of said plurality of base stations, evaluating an uplink channel quality characteristic between said communication terminal and the respective base station,

determine the base station having the best uplink channel quality characteristic,

selecting the determined base station as the serving base station, and

controlling some or all base stations other than the serving base station not to forward data packets received from said communication terminal to said gateway unit during the soft handover.

**20.** The method according to claim 19, further comprising the steps of:

receiving a data packet from said communication terminal at said plurality of base stations,

checking data integrity of said received data packet at each of said plurality of base stations, and

if data integrity of said received data packet was confirmed by a base station controlled to forward said received data packet to said gateway, transmitting said received data packet from the respective base station to said gateway.

**21.** The method according to claim 19 or 20 , further comprising the steps of:

if data integrity of said received data packet was not acknowledged by said serving base station, transmitting from said serving base station a status request relating to said received data packet to the other base stations than said serving base station, and

receiving status reports relating to said received data packet from said other base stations, wherein said status report indicates whether data integrity of said data packet was confirmed at the respective base station or comprises said received data packet.

**22.** The method according to one of claims 19 to 21, wherein said notification and said status report are transmitted to said serving base station in at least one frame protocol control frame or by radio network signaling messages over a wired interface.

**23.** The method according to one of claims 19 to 22, wherein said step of selecting the serving base station is executed by the current serving base station.

**24.** The method according to claim 1 to 23, wherein said uplink channel quality characteristic is determined based on at least one of a path loss for an uplink channel between said communication terminal and the respective base station, closed loop power control commands transmitted by a base station to said communication terminal, and uplink interference.

**25.** The method according to one of claims 1 to 24, wherein said selection of the serving base station is independent from uplink data channel air interface transmission.

**26.** The method according to one of claims 19 to 25, wherein said selection of the serving base station is periodically triggered by a configurable timer.

27. The method according to claim 19 to 26, wherein the step of evaluating an uplink channel quality characteristic comprises averaging parameters indicating the uplink channel quality over a configurable time interval.

28. The method according to claim 27, wherein said time interval is configured by radio resource control signaling or another system specific control plane protocol.

29. The method according to claim 27 or 28, wherein said time interval is selected taking into account the velocity in a movement of said communication terminal, and the signaling delay between at least two base stations of said plurality of base stations.

30. The method according to one of claims 19 to 29, wherein the current serving base station transmits a selection command to the new serving base station upon selection.

31. The method according to claim 30, wherein the selection command indicates an activation time at which the new serving base station should start forwarding the successfully received data packets to a gateway interconnecting the mobile communication network to a fixed communication network, and at which the previous serving base station should stop forwarding the successfully received data packets to the gateway.

32. The method according to one of claims 15 to 18 or claim 30 or 31, wherein the previous or current serving base station and the new serving base station continue their serving base station functionality in parallel for a predetermined time period.

33. The method according to one of claims 14 to 18 or claim 30 or 31, wherein the selection command is transmitted in an information element of NBAP or RNSAP message.

34. The method according to one of claims 1 to 33, wherein the received data packet is transmitted in at least one frame protocol data frame and the control packet and/or the notification is transmitted in at least one frame protocol control frame.

35. A base station in a mobile communication system wherein a communication terminal is in communication with a plurality of base stations during a soft handover, wherein said base station comprises means for implementing the method according to one of claims 1 to 34.

36. A control unit in a mobile communication system comprising a communication terminal, a plurality of base stations and said control unit connected to said plurality of base stations, the communication terminal being in communication with said plurality of base stations during a soft handover, wherein said control unit comprises means for implementing the method according to one of claims 1 to 18.

37. A method for signaling uplink channel quality characteristics from a communication terminal to a control unit in a mobile communication system comprising the communication terminal, a plurality of base stations and the control unit connected to said plurality of base stations, said communication terminal being in communication with said plurality of base stations during a soft handover, the method being specifically adapted to the control of said plurality of base stations according to one of claims 1 to 18.

38. A method for signaling uplink channel quality characteristics from a communication terminal to a base station in a mobile communication system comprising the communication terminal and a plurality of base stations, said communication terminal being in communication with said plurality of base stations during a soft handover, the method being specifically adapted to the control of said plurality of base stations according to one of claims 19 to 34.

39. The method according to claim 37 or 38, wherein said method comprises the steps of:

receiving power control commands from said plurality of base stations,

for each base station of said plurality of base stations, the communication terminal determining a channel quality characteristic related to each base station based on the power control commands received from the respective base station, and

transmitting said determined channel quality characteristics to said control unit via a base station, wherein said determined channel quality characteristics are considered by said control unit or said serving base station to select a serving base station.

40. The method according to claim 39, wherein determining said channel quality characteristic for each base station comprises combining said power commands received from the respective base station over a configurable time period.

41. A communication terminal in a mobile communication system comprising the communication terminal, a plurality of base stations and a control unit connected to said plurality of base stations, the communication terminal being in communication with said plurality of base stations during a soft handover, wherein said communication terminal comprises means for implementing the method according to one of claims 37 to 40.

42. A mobile communication system comprising a communication terminal according to claim 41, a plurality of base stations and at least one control unit according to claim 36 connected to said plurality of base stations, the communication terminal being in communication with said plurality of base stations during a soft handover, said plurality of base stations comprising at least one base station according to claim 35.

43. A mobile communication system comprising a communication terminal according to claim 41 and a plurality of base stations, the communication terminal being in communication with said plurality of base stations during a soft handover, said plurality of base stations comprising at least one base station according to claim 35.

Fig. 1

Fig. 2

101

Core network

Iu

202

201

S-RNS

D-RNS

RNC

RNC

Iur

Iub

Iub

Iub

Iub

Node B

Node B

Node B

205

Node B

203

204

206

301

302

UE

103

Fig. 3

GGS

SGSN

Iu

401

Iu

RNG

Iur

RNG

Iu, Iur

Node B+

402

Iur+

Iu, Iur

Iu, Iur

Iu, Iur

Node B+

Node B+

403

Iur+

Node B+

Iur+

404

Fig. 4

Node B+

405

Fig. 5

Fig. 6

**MAC-eu_b**

**MAC-eu**

**MAC-eu**

**MAC-eu**

Scheduler

HARQ Receiver Entity #N

⋮

HARQ Receiver Entity #2

HARQ Receiver Entity #1

Process Selection

Scheduling Request Message from UE

Scheduling Grant Message to UE

E-DCH

Physical Layer

Associated downlink signaling
(scheduling grant message, feedback message)

Associated uplink signaling
(scheduling request message, rate indicator message)

Fig. 7

EP 1 507 422 A1

EP 1 507 422 A1

to higher layer

MAC-eu $_r$

MAC-eu

MAC-eu

MAC-eu

Reordering Buffer Entity #M

...

Reordering Buffer Entity #2

Reordering Buffer Entity #1

Data Flow Selection

Fig. 8

From Fig. 7

Fig. 9

1001

Receiving Data from
Serving Node B

1002

Received Data is
a Data Packet?

yes → Process Received Data Packet

1003

no

1004

Receive Status Reports and/or
Data Packets from other Node Bs
of the Active Set

1005

Receive Status Reports from
other Node Bs of the Active Set

yes

1006

Received Data Packet
from one Node B?

no

1007

Request Retransmission of the
Data Packet

Fig. 10

1101

timer expiry

1102

serving Node B selection ◄——— measurement results

1103

serving Node B
changed?

no

yes

1104

trigger signaling procedure
for new serving Node B

Fig. 11

Fig. 12

Node B2

Node B1

S-RNC

Decision to change serving Node B

RL Reconfiguration

RL Reconfiguration

Activation Time Negotiation Request

Activatioin Time Confirmation

Activatioin Time Confirmation

**European Patent Office**

**EUROPEAN SEARCH REPORT**

Application Number

EP 03 01 8471

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 867 791 A (CHAMBERT GEORGE) 2 February 1999 (1999-02-02)<br><br>* column 1, line 35 - line 55 *<br>* column 2, line 27 - line 35 *<br>* column 2, line 43 - line 52 *<br>--- | 1-4,6,7, 11,12, 19,21, 22,24, 25,27, 34-43 | H04Q7/30<br>H04L12/56 |
| A | WO 02 082847 A (BUOT THEODORE ;WIGARD JEROEN (DK); NOKIA CORP (FI)) 17 October 2002 (2002-10-17)<br>* page 2, line 6 - line 17 *<br>* page 4, line 17 - line 34 *<br>--- | 1-43 | |
| A | GB 2 367 719 A (ERICSSON TELEFON AB L M) 10 April 2002 (2002-04-10)<br>* page 8, line 22 - page 9, line 21 *<br>----- | 1-43 | |

| | | | TECHNICAL FIELDS SEARCHED (Int.Cl.7) |
|---|---|---|---|
| | | | H04Q<br>H04L |

The present search report has been drawn up for all claims

| Place of search | Date of completion of the search | Examiner |
|---|---|---|
| BERLIN | 27 February 2004 | Bernedo Azpiri, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 03 01 8471

This annex lists the patent family members relating to the patent documents cited in the above-mentioned European search report.
The members are as contained in the European Patent Office EDP file on
The European Patent Office is in no way liable for these particulars which are merely given for the purpose of information.

27-02-2004

| Patent document cited in search report | | Publication date | Patent family member(s) | | Publication date |
|---|---|---|---|---|---|
| US 5867791 | A | 02-02-1999 | SE | 516723 C2 | 19-02-2002 |
| | | | AU | 698017 B2 | 22-10-1998 |
| | | | AU | 4274996 A | 26-06-1996 |
| | | | CA | 2205571 A1 | 13-06-1996 |
| | | | CN | 1168757 A ,B | 24-12-1997 |
| | | | EP | 0796544 A1 | 24-09-1997 |
| | | | FI | 972364 A | 04-06-1997 |
| | | | JP | 10510404 T | 06-10-1998 |
| | | | SE | 9404275 A | 09-06-1996 |
| | | | WO | 9618277 A1 | 13-06-1996 |
| WO 02082847 | A | 17-10-2002 | WO | 02082847 A1 | 17-10-2002 |
| | | | BR | 0110542 A | 01-04-2003 |
| | | | EP | 1275265 A1 | 15-01-2003 |
| GB 2367719 | A | 10-04-2002 | AU | 2357802 A | 15-04-2002 |
| | | | WO | 0230144 A1 | 11-04-2002 |
| | | | EP | 1323326 A1 | 02-07-2003 |

EPO FORM P0459

For more details about this annex : see Official Journal of the European Patent Office, No. 12/82